# EUROPEAN PATENT SPECIFICATION

(11) **EP 1 678 709 B1**
(45) Date of publication and mention of the grant of the patent: **03.02.2010**
(21) Application number: 04770289.9
(22) Date of filing: 19.10.2004
(51) Int. Cl.: G11B 7/13, G01J 1/42

(54) **OPTICAL DISC DRIVE**
OPTISCHES PLATTENLAUFWERK
UNITE DE DISQUE OPTIQUE

(30) Priority: 21.10.2003 EP 03103872
(43) Date of publication of application: 12.07.2006
(73) Proprietor: Koninklijke Philips Electronics N.V., 5621 BA Eindhoven (NL)
(72) Inventor: BAKX, Johannus, L., NL-5656 AA Eindhoven (NL)
(74) Representative: Uittenbogaard, Frank
(86) International application number: PCT/IB2004/052143
(87) International publication number: WO 2005/038786

(56) References cited:
- EP-A- 0 478 222
- EP-A- 0 939 397
- EP-A- 0 952 575
- EP-A- 1 630 798
- US-B1- 6 400 662
- US-B1- 6 418 107
- US-B1- 6 487 149

## Description

### FIELD OF THE INVENTION

The present invention relates in general to a disc drive apparatus for writing/reading information into/from an optical storage disc; hereinafter, such a disc drive apparatus will also be indicated as "optical disc drive".

### BACKGROUND OF THE INVENTION

For optically scanning the rotating disc, an optical disc drive comprises a light beam generator device (typically a laser diode), an objective lens for focusing the light beam in a focal spot on the disc, and an optical detector for receiving the reflected light reflected from the disc and for generating an electrical detector output signal. The optical detector usually comprises multiple detector segments, each segment providing an individual segment output signal. These individual segment output signals are transferred to a data processing circuit, for deriving data information and error signals.

Typically, an optical disc is designed for being scanned with a laser beam having one predetermined wavelength. On the other hand, different types of optical discs have been designed for being scanned with laser beams of mutually different wavelengths. For instance, optical discs for red light (650 nm) and for infrared light (780 nm) have been developed, and more recently the blue light disc was developed. It is desirable that a disc drive should be capable of handling optical discs of different types. Therefore, an optical pickup unit (OPU) of a multiple-type disc drive should have the capability of generating laser beams of different colors, and should have an optical system capable of handling light having different wavelengths.

In principle, it is possible that a single optical detector is used which is sensitive to a wide spectral range. However, this would imply that optical components (such as lenses, beam splitters, etc) should be designed to operate at different wavelengths, which is quite difficult. Therefore, the optical system of a multiple-type disc drive usually comprises different optical paths for the individual laser beams, including separate optical detectors for the individual laser beams. Each such separate optical detector may be sensitive to a wide spectral range, but the separate optical detectors may also be sensitive to a narrow spectral range only, corresponding to the color of the respective laser beam.

It is also possible that an OPU comprises two optical detectors of the same color, one being used in the case of writing and the other being used in the case of reading.

A problem in all cases of an OPU having multiple optical detectors relates to the further processing of the output signals of the optical detectors in a further signal processing circuit, which typically takes place in an IC mounted on a PCB (the main PCB) located remote from the OPU. More specifically, the problem relates to economically coupling the multiple outputs of the multiple optical detectors to the single input of the signal processing circuit. In this respect, it is noted that each detector output actually involves an output port comprising a set of outputs, each such output being associated with a corresponding detector segment.

In one approach, each set of outputs of each optical detector is connected to the main PCB through a corresponding (flexible) cable. The signal processing circuit may be implemented as a special IC having two (or more) input ports, or by two (or more) standard single-input ICs.

In another approach, as described, for example, in EP-A-0.939.397, the multiple sets of detector outputs are connected to the main PCB through one common cable, in which case each detector output is selectively coupled to the corresponding cable wire via a controllable switch.

An important objective of the present invention is to provide a more cost-efficient solution to said problem.
EP1630798A1 representing state of the art in the sense of Art 54(3) EPC, discloses an optical detection system having a detection region for detecting light that is reflected from a first or a second information recording medium and that passes through an optical element. Both information recording media are multi-layer discs that have at least two layers, and the detection region includes a detection region for detecting first order and above diffracted light that has a first wavelength, and a detection region for detecting first order and above diffracted light that has a second wavelength. The first detection region is arranged such that it does not straddle across a region that is divided by a maximum range of the dilation of zero order light coming from the first information recording medium that comes from a recording layer that differs from the recording layer that is to be recorded or reproduced, and the second detection region is arranged such that it does not straddle across a region that is divided by a maximum range of the dilation of zero order light coming from the second information recording medium that comes from a recording layer that differs from the recording layer that is to be recorded or reproduced.

### SUMMARY OF THE INVENTION

According to an important aspect of the present invention, two (or more) optical detectors having current outputs are used. Respective output terminals of different optical detectors are simply connected together and to one end of a wire of the coupling cable. The other end of said wire is connected to a corresponding input terminal of the signal processing circuit, which may be implemented as a standard single input port IC. For transforming the current signals to (standard) voltage signals, each coupling wire may be coupled to ground through a corresponding terminating resistor, which may be either integrated in the signal processing IC or implemented as an external resistor.
**The optical detectors are of mutually identical design except for the mutually different wavelength sensitivity ranges.**

### BRIEF DESCRIPTION OF THE DRAWINGS

These and other aspects, features and advantages of the present invention will be further explained by the following description with reference to the drawings, in which same reference numerals indicate same or similar parts, and in which:
Figure 1 schematically illustrates some relevant components of an optical disc drive apparatus;
Figure 2 schematically illustrates an optical detector;
Figure 3 schematically illustrates an optical disc drive apparatus according to the present invention;
Figure 4 is a block diagram schematically illustrating an optical detector system according to the present invention.

### DESCRIPTION OF THE INVENTION

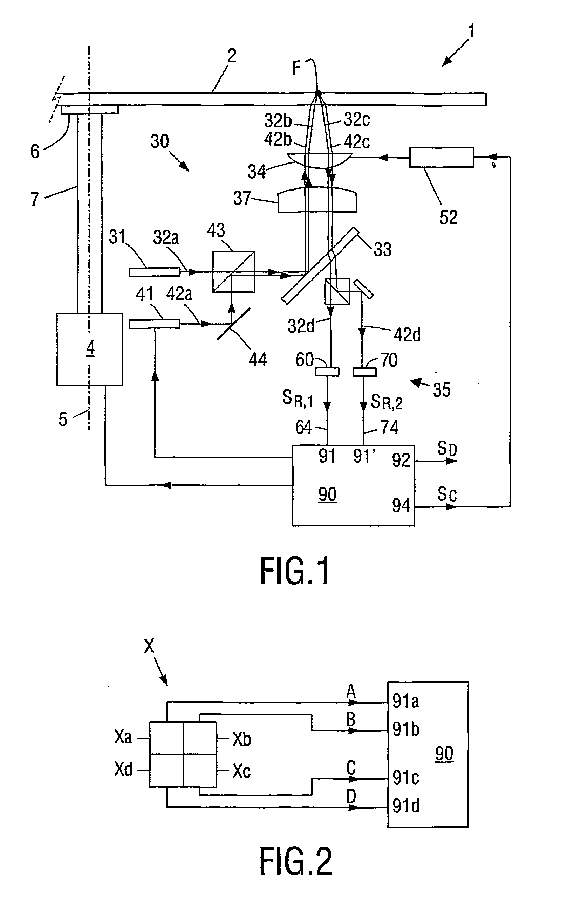

Figure 1 schematically illustrates an optical disc drive apparatus 1 suitable for storing information on or reading information from an optical storage disc 2, typically a DVD or a CD. The optical disc 2 comprises at least one track (not shown for the sake of simplicity), either in the form of a continuous spiral or in the form of multiple concentric circles, of storage space where information can be stored in the form of a data pattern. The optical disc may be of the read-only type, where information is recorded during manufacture, which information can only be read by a user. The optical disc may also be of a writable type, where information can be stored by a user. Since the technology of optical discs in general, the way in which information can be stored in an optical disc, and the way in which optical data can be read from an optical disc are commonly known, it is not necessary here to describe this technology in more detail.

For rotating the disc 2, the disc drive apparatus 1 comprises a motor 4 fixed to a frame (not shown for the sake of simplicity), defining a rotation axis 5. For receiving and holding the disc 2, the disc drive apparatus 1 may comprise a turntable or clamping hub 6, which in the case of a spindle motor 4 is mounted on the spindle 7 of the motor 4.

The disc drive apparatus 1 further comprises an optical system 30 for scanning tracks of the disc 2 with an optical beam. The optical system 30 comprises light beam generating means 31, 41 for generating light beams and an optical detector system 35 for receiving reflected light and generating an electrical output signal representing the amount of detected light.

More specifically, in the exemplary arrangement illustrated in Figure 1, the disc drive apparatus 1 is a multiple-type drive designed for handling at least two types of disc, i.e. CD as well as DVD, for example. The optical system 30 comprises a first light beam generating means 31 and a second light beam generating means 41, each typically a laser component such as a laser diode, arranged to generate a first light beam 32 and a second light beam 42, respectively. In the following, different sections of the optical path of a light beam 32, 42 will be indicated by characters a, b, c, etc. added to the respective reference numeral 32,42.

The first light beam 32 passes through a first beam splitter 43, a second beam splitter 33, a collimator lens 37, and an objective lens 34 to reach (beam 32b) the disc 2. The first light beam 32b is reflected from the disc 2 (reflected first light beam 32c) and passes through the objective lens 34, the collimator lens 37, and the second beam splitter 33 (beam 32d) to reach a first optical detector 60 of the optical detector system 35.

The second light beam 42 is reflected by a mirror 44, passes through the first beam splitter 43, and then follows an optical path comparable to the optical path of the first light beam 32, indicated by reference numerals 42b, 42c. After having passed through the second beam splitter 33, the two beams 32 and 42 are separated, for example by a third beam splitter 45. The second light beam 42d reaches a second optical detector 70 of the optical detector system 35, for example via a second mirror 46, which second optical detector 70 may be located at a substantial distance of the order of a few centimeter from the first optical detector 60.

The objective lens 34 is designed to focus one of the two light beams 32b, 42b in a focal spot F on an information layer (not shown for the sake of simplicity) of the disc 2.

During operation, the light beam should remain focused on a track. To this end, the objective lens 34 is arranged so as to be displaceable in axial and radial directions, and the optical disc drive apparatus 1 comprises an actuator system 52 arranged for displacing the objective lens 34 with respect to the disc 2. Since actuator systems are known per se, while furthermore the design and operation of such actuator systems are not the subject of the present invention, it is not necessary here to discuss the design and operation of such actuator systems in great detail.

It is noted that means for supporting the objective lens with respect to an apparatus frame and means for displacing the objective lens are generally known per se. Since the design and operation of such supporting and displacing means are not the subject of the present invention, it is not necessary here to discuss them in great detail.

The disc drive apparatus 1 further comprises a signal processing circuit 90 having read signal inputs 91 and 91' for receiving read signals S_{R,1} or S_{R,2}, respectively, from the optical detector system 35. The signal processing circuit 90 is designed to process the read signals S_{R,1} or S_{R,2} in order to derive a data signal S_{D} and to provide this data signal S_{D} at a data output 92. The signal processing circuit 90 is further designed to process the read signals S_{R,1} or S_{R,2} in order to generate control signals S_{C} for the actuator system 52, and to provide these control signals S_{C} at a control output 94.

Figure 2 illustrates that an optical detector X normally comprises a plurality of detector segments. In the example shown, the optical detector X comprises four detector segments Xa, Xb, Xc, Xd capable of providing individual detector signals A, B, C, D indicating the amount of light incident on each of the four detector quadrants, respectively. Since such a four-quadrant detector is commonly known per se, it is not necessary here to give a more detailed description of its design and functioning.

It is noted that different designs for the optical detector X are also possible. Specifically, it is noted that that the optical detector may have central aperture segments and satellite segments, as will be clear to those skilled in the art. Also, it is noted that the disc drive apparatus may be part of a one-spot beam detection system, or of a 3-spot beam detection system, as will be clear to those skilled in the art.

Figure 2 also illustrates that the read signal input 91 of the signal processing circuit 90 actually comprises a plurality of inputs for receiving all individual detector signals. Thus, in the illustrated case of a four-quadrant detector, the read signal input 91 of the signal processing circuit 90 actually comprises four inputs 91a, 91b, 91c, 91d for receiving said individual detector signals A, B, C, D, respectively. The signal processing circuit 90 is designed to process said individual detector signals A, B, C, D in order to derive data and control information therefrom, as will be clear to those skilled in the art.

If the disc drive apparatus 1 only comprises one single optical detector X, the detector segments may be simply connected to the corresponding inputs 9 1 a, 9 1 b, 9 1 c, 91 d of the signal processing circuit 90 in a straightforward manner, as illustrated in Figure 2. However, a problem arises in the case of an optical detector system 35 suitable for different wavelengths. In the apparatus as illustrated in Figure 1, the signal processing circuit 90 has two separate read signal inputs 91 and 91' for receiving read signals S_{R,1} or S_{R,2} from the optical detectors 60 and 70, respectively. Each optical detector 60, 70 is connected to the corresponding read signal input 91, 91' via an individual cable 64, 74 (each cable comprising multiple wires, as will be clear to those skilled in the art).

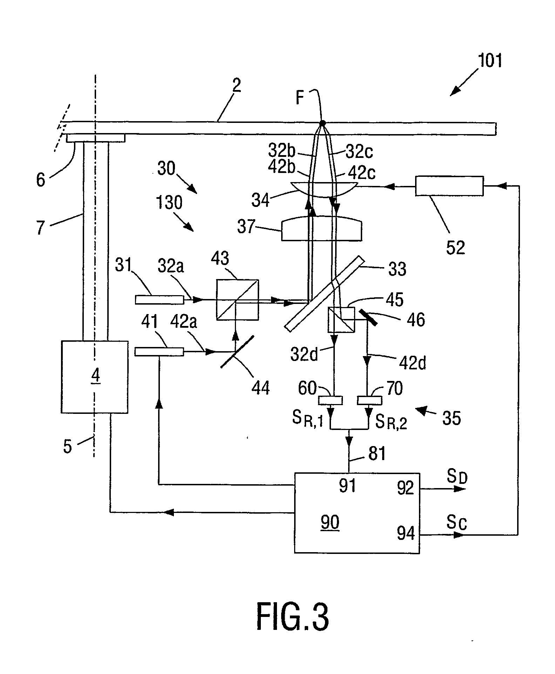

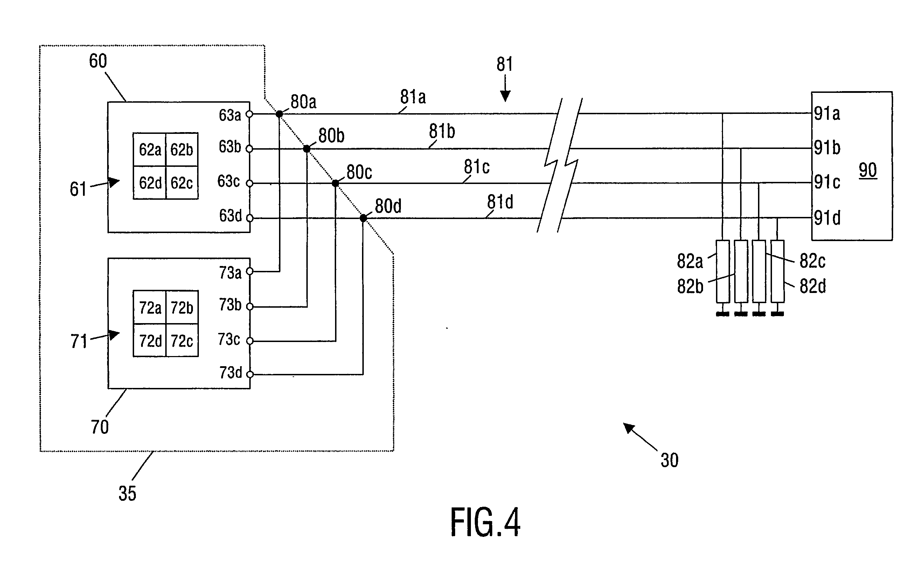

Figure 3 is a diagram comparable to Figure 1, illustrating a disc drive apparatus 101 according to the present invention, which is identical to the apparatus 1 as discussed above, except that the signal processing circuit 90 has only one read signal input 91, and both optical detectors 60, 70 are connected to this signal input 91 via one common cable 81 (comprising multiple common wires 81a-d), as will be explained in more detail with reference to Figure 4.

Figure 4 is a block diagram schematically illustrating an optical detector system 35 according to the present invention. This optical detector system 35 comprises a plurality of optical detector units, in this case two optical detector units 60 and 70, each comprising an array 61, 71 of multiple detector segments 62a, 62b, 62c, 62d and 72a, 72b, 72c, 72d, respectively. Figure 3 only shows four detector segments in each detector array 61, 71, but it should be clear that this is for purposes of illustration only without limiting the scope of the present invention.

Each optical detector unit 60, 70 has a plurality of output terminals 63a, 63b, 63c, 63d and 73a, 73b, 73c, 73d, respectively, each terminal being associated with a corresponding detector segment. Output terminal 63a (63b/63c/63d) of first optical detector unit 60 is connected to a corresponding output terminal 73a (73b/73c/73d) of second optical detector unit 70 at a node 80a (80b/80c/80d), which forms an output node of the optical detector system 35, which output node 80a (80b/80c/80d) is connected to a corresponding input terminal 91a (91b/91c/91d) of the signal processing circuit 90 via one line 81a (81b/81c/81d) of common cable 81.

According to an important aspect of the present invention, the optical detector units 60 and 70 are of a type that has current outputs, i.e. the output signals provided at their respective output terminals 63a-d and 73a-d are current signals. During operation of the disc drive apparatus 2, only one of the optical detector units 60 and 70 is operative, as determined by the identity of the laser 31, 41 in use. The other, non-operative detector unit, by virtue of the fact that it does not receive light, is in a "Power Down Mode", in which its outputs are floating, or in any case provide a high input impedance. Thus, the presence of the non-operative detector unit does not affect the output signals produced by the operative detector unit.

The signal processing circuit 90 may be a circuit having current inputs, i.e. designed to process current signals. However, the signal processing circuit 90 may alternatively be a standard circuit having voltage inputs, i.e. designed to process voltage signals. In this case, as shown, each line 81a (81b/81c/81d) is coupled to ground via a corresponding terminator resistor 82a (82b/82c/82d). Such terminator resistors may be located on board the optical detector system 35, but preferably such terminator resistors are located in the proximity of the signal processing circuit 90. They may even be integrated on board the signal processing IC.

The resistance value of each terminator resistor 82a (82b/82c/82d) may conveniently be chosen to match the characteristic impedance of the corresponding line 81a (81 b/81c/81 d), in order to improve the robustness of signal transport at high bandwidth.

It is noted that, in the illustrative example of Figures 1 and 3, the optical paths of the two light beams 32 and 42 are largely comparable, while the two light beams 32 and 42 are focused by the same lenses 37 and 34 so that the focal points F for the two light beams substantially coincide. Alternatively, different optical components may be used for the two light beams, so that the optical system 30 contains two separate optical paths for the two light beams 32 and 42 and the focal points F for the two light beams do not coincide. Optical separation components like the third beam splitter 45 may then be omitted.

In an embodiment where the light beams are completely separated, it is possible to provide separate optical units 130, each unit comprising a laser unit such as 31, an optical lens such as 34, and an optical detector such as 60. Such units may be mounted in an optical disc drive apparatus 101 in which the current outputs of the individual optical detectors are connected together, as described above.

It will be clear to those skilled in the art that the present invention is not limited to the exemplary embodiments discussed above, but that several variations and modifications are possible within the protective scope of the invention as defined in the appending claims.

For instance, although it is preferred that the optical detector units 60 and 70 are of mutually identical design, except for their wavelength sensitivity ranges, while it is also preferred that all corresponding output terminals of the optical detector units 60 and 70 are connected together, as illustrated, an advantage within the context of the present invention is already achieved if only one current output of the first detector unit 60 is connected to one corresponding current output of the second detector unit 70.

Furthermore, although the present invention has been explained for an illustrative example having two light beams, it should be clear that the present invention may equally well be implemented in an apparatus having three or more light beams.

In the above, the present invention has been explained with reference to block diagrams, which illustrate functional blocks of the device according to the present invention. It is to be understood that one or more of these functional blocks may be implemented in hardware, where the function of such a functional block is performed by individual hardware components, but it is also possible that one or more of these functional blocks are implemented in software, so that the function of such a functional block is performed by one or more program lines of a computer program or a programmable device such as a microprocessor, microcontroller, digital signal processor, etc.

## Claims

1. Disc drive apparatus (101) comprising first light beam generating means (31) for generating a first light beam (32), second light beam generating means (41) for generating a second light beam (42), and an optical detector system (35) comprising a first optical detector unit (60) and a second optical detector unit (70), both comprising an array (61; 71) of detector segments (62a-d; 72a-d) and at least one output terminal (63a-d; 73a-d) defining a current output of the corresponding optical detector unit (60; 70), wherein, during operation of the disc drive apparatus (101), the first light beam (32) reaches the first optical detector unit (60) and the second light beam (42) reaches the second optical detector unit (70) which is located at a substantial distance from the first optical detector unit (60), wherein at least one current output (63a) of the first optical detector unit (60) is connected directly to a corresponding current output (73a) of the second optical detector unit (70) at an output node (80a) wherein the first and second optical detector units (60; 70) are of mutually identical design **with the exception that** the first and second optical detector units (60; 70) have mutually different wavelength sensitivity ranges.

2. Disc drive apparatus (101) according to claim 1, wherein each current output (63a; 63b; 63c; 63d) of the first optical detector unit (60) is connected directly to the corresponding current output (73a; 73b; 73c; 73d) of the second optical detector unit (70) at a corresponding output node (80a; 80b; 80c; 80d).

3. Disc drive apparatus (101) according to claim 1, wherein each optical detector unit (60; 70) has a non-operative state in which its outputs (63a-d; 73a-d) are floating and/or present a high input impedance.

4. Disc drive apparatus (101) according to claim 3, wherein each optical detector unit (60; 70) is in its non-operative state if it does not receive any suitable light.

5. Disc drive apparatus (101), according to claim 1 comprising:
a signal processing circuit (90) having at least one input terminal (91a-d) connected via a line (81a-d) to a corresponding output node (80a-d) of the optical detector system (35).

6. Disc drive apparatus (101) according to claim 5, wherein said at least one input terminal (91a-d) comprises a current input.

7. Disc drive apparatus (101) according to claim 5, wherein said at least one input terminal (91 a-d) comprises a voltage input, and wherein a terminator resistor (82a-d) is connected to said line (81a-d).

8. Disc drive apparatus (101) according to claim 7, wherein said terminator resistor (82a-d) is arranged in the proximity of said signal processing circuit (90).

9. Disc drive apparatus (101) according to claim 7, wherein said terminator resistor (82a-d) is integrated in an IC implementing said signal processing circuit (90).

10. Disc drive apparatus (101) according to claim 1, comprising:
optical components (43, 44, 37, 34) for directing and focusing the first and second light beams (32b, 42b) in a focal spot (F) on an optical disc(2);
optical components (34, 37, 33, 45, 46) for directing reflected light beams (32c, 42c; 32d, 42d) to respective optical detector units (60; 70) of the optical detector system (35).

11. Disc drive apparatus (101) according to claim 10, wherein said optical components (43, 44, 37, 34; 34, 37, 33, 45, 46) are arranged such that said first and second light beams (32, 42) have at least partly common light paths.

12. Disc drive apparatus (101) according to claim 10, wherein said optical components (43, 44, 37, 34; 34, 37, 33, 45, 46) are arranged such that said first and second light beams (32, 42) have completely separate light paths.

## Patentansprüche

1. Plattenlaufwerk (101) mit ersten Lichtstrahlerzeugungsmitteln (31) zum Erzeugen eines ersten Lichtstrahls (32), mit zweiten Lichtstrahlerzeugungsmitteln (41) zum Erzeugen eines zweiten Lichtstrahls (42), und mit einem optischen Detektorsystem (35) mit einer ersten optischen Detektoreinheit (60) und einer zweiten optischen Detektoreinheit (70), die beide eine Anordnung (61, 71) von Detektorsegmenten (62a-d; 72a-d) umfassen und wenigstens eine Ausgangsklemme (63a-d; 73a-d), die einen Stromausgang der entsprechenden optischen Detektoreinheit (60; 70) definieren, wobei im Betrieb des Plattenlaufwerks (101) der erste Lichtstrahl (32) die erste optische Detektoreinheit (60) erreicht und der zweite Lichtstrahl (42) die zweite optische Detektoreinheit (70) erreicht, die sich in einem wesentlichen Abstand von der ersten optischen Detektoreinheit (60) befindet, wobei wenigstens ein Stromausgang (63a) der ersten optischen Detektoreinheit (60) unmittelbar mit einem entsprechenden Stromausgang (73a) der zweiten optischen Detektoreinheit (70) verbunden ist, und zwar an einem Ausgangsknotenpunkt (80a), wobei die erste und die zweite optische Detektoreinheit (60; 70) von einem identischen Entwurf sind, mit der Ausnahme, dass die erste und die zweite optische Detektoreinheit (60; 70) je einen unterschiedlichen Wellenlängenempfindlichkeitsbereich haben.

2. Plattenlaufwerk (101) nach Anspruch 1, wobei jeder Stromausgang (63a; 63b; 63c; 63d) der ersten optischen Detektoreinheit (60) unmittelbar mit dem entsprechenden Stromausgang (73a; 73b; 73c; 73d) der zweiten optischen Detektoreinheit (70) verbunden ist, und zwar an einem entsprechenden Ausgangsknotenpunkt (80a; 80b; 80c; 80d).

3. Plattenlaufwerk (101) nach Anspruch 1, wobei jede optische Detektoreinheit (60; 70) einen nicht wirksamen Zustand hat, in dem die Ausgänge (63a-d; 73a-d) schwebend und/oder eine hohe Eingangsimpedanz bieten.

4. Plattenlaufwerk (101) nach Anspruch 3, wobei jede optische Detektoreinheit (60; 70) sich in dem nicht wirksamen Zustand befindet, wenn es kein geeignetes Licht empfängt.

5. Plattenlaufwerk (101) nach Anspruch 1, mit einer Signalverarbeitungsschaltung (90) mit wenigstens einer Eingangsklemme (91a-d), die über eine Leitung (81 a-d) mit einem entsprechenden Ausgangsknoten (80a-d) des optischen Detektorsystems (35) verbunden ist.

6. Plattenlaufwerk (101) nach Anspruch 5, wobei die genannte wenigstens eine Eingangsklemme (91 a-d) einen Stromeingang aufweist.

7. Plattenlaufwerk (101) nach Anspruch 5, wobei die genannte wenigstens eine Eingangsklemme (91 a-d) einen Spannungseingang aufweist, und wobei ein Abschlusswiderstand (82a-d) mit der genannten Leitung (81 a-d) verbunden ist.

8. Plattenlaufwerk (101) nach Anspruch 7, wobei der genannte Abschlusswiderstand (82a-d) in der Nähe der genannten Signalverarbeitungsschaltung (90) vorgesehen ist.

9. Plattenlaufwerk (101) nach Anspruch 7, wobei der genannte Abschlusswiderstand (82a-d) in einer die genannte Signalverarbeitungsschaltung (90) implementierenden IC integriert ist.

10. Plattenlaufwerk (101) nach Anspruch 1, das Folgendes umfasst:
- optische Elemente (43, 44, 37, 34) zum Ausrichten und Fokussieren des ersten und zweiten Lichtstrahls (32b, 42b) zu einem Brennpunkt (F) auf einer optischen Platte (2);
- optische Elemente (34, 37, 33, 45, 46) zum Ausrichten reflektierter Lichtstrahlen (32c, 42c; 32d, 42d) zu reflektierenden optischen Detektoreinheiten (60; 70) des optischen Detektorsystems (35).

11. Plattenlaufwerk (101) nach Anspruch 10, wobei die genannten optischen Elemente (43, 44, 37; 34, 37, 33, 45, 46) derart vorgesehen sind, dass der genannte erste und zweite Lichtstrahl (32, 42) wenigstens teilweise einen gemeinsamen Lichtweg haben.

12. Plattenlaufwerk (101) nach Anspruch 10, wobei die genannten optischen Elemente (43, 44, 37, 34; 34, 37, 33, 45, 46) derart vorgesehen sind, dass der genannte erste und zweite Lichtstrahl (32, 42) völlig getrennte Lichtwege haben.

## Revendications

1. Appareil d'entraînement de disque (101) comprenant des premiers moyens de génération de faisceau de lumière (31) pour générer un premier faisceau de lumière (32), des deuxièmes moyens de génération de faisceau de lumière (41) pour générer un deuxième faisceau de lumière (42), et un système de détection optique (35) comprenant une première unité de détection optique (60) et une deuxième unité de détection optique (70), les deux comprenant un éventail (61 ; 71) de segments de détection (62a à d ; 72a à d) et au moins une borne de sortie (63a à d ; 73a à d) définissant une sortie en courant de l'unité de détection optique correspondante (60 ; 70) dans laquelle, au cours du fonctionnement de l'appareil d'entraînement de disque (101), le premier faisceau de lumière (32) atteint la première unité de détection optique (60) et dans laquelle le deuxième faisceau de lumière (42) atteint la deuxième unité de détection optique (70) qui se situe à une distance substantielle de la première unité de détection optique (60) dans laquelle au moins une sortie en courant (63a) de la première unité de détection optique (60) est connectée directement à une sortie en courant correspondante (73a) de la deuxième unité de détection optique (70) à l'endroit d'un noeud de sortie (80a) où les première et deuxième unités de détection optiques (60 ; 70) présentent une conception mutuellement identique à l'exception du fait que les première et deuxième unités de détection optiques (60 ; 70) présentent des gammes de sensibilité de longueur d'onde mutuellement différentes.

2. Appareil d'entraînement de disque (101) selon la revendication 1, dans lequel chaque sortie en courant (63a ; 63b ; 63c ; 63d) de la première unité de détection optique (60) est connectée directement à la sortie en courant correspondante (73a ; 73b ; 73c ; 73d) de la deuxième unité de détection optique (70) à l'endroit d'un noeud de sortie correspondant (80a ; 80b ; 80c ; 80d).

3. Appareil d'entraînement de disque (101) selon la revendication 1, dans lequel chaque unité de détection optique (60 ; 70) présente un état non opérationnel dans lequel ses sorties (63a à d ; 73a à d) sont flottantes et/ou présentent une haute impédance d'entrée.

4. Appareil d'entraînement de disque (101) selon la revendication 3, dans lequel chaque unité de détection optique (60 ; 70) se situe dans son état non opérationnel si elle ne reçoit pas de lumière appropriée quelconque.

5. Appareil d'entraînement de disque (101) selon la revendication 1, comprenant :
un circuit de traitement de signal (90) ayant au moins une borne d'entrée (91 a à d) qui est connectée par le biais d'une ligne (81 a à d) à un noeud de sortie correspondant (80a à d) du système de détection optique (35).

6. Appareil d'entraînement de disque (101) selon la revendication 5, dans lequel ladite au moins une borne d'entrée (91a à d) comprend une entrée en courant.

7. Appareil d'entraînement de disque (101) selon la revendication 5, dans lequel ladite au moins une borne d'entrée (9 1 a à d) comprend une entrée en tension et dans lequel une résistance de terminaison (82a à d) est connectée à ladite ligne (81a à d).

8. Appareil d'entraînement de disque (101) selon la revendication 7, dans lequel ladite résistance de terminaison (82a à d) est disposée à proximité dudit circuit de traitement de signal (90).

9. Appareil d'entraînement de disque (101) selon la revendication 7, dans lequel ladite résistance de terminaison (82a à d) est intégrée dans un CI mettant en oeuvre ledit circuit de traitement de signal (90).

10. Appareil d'entraînement de disque (101) selon la revendication 1, comprenant :
des composants optiques (43, 44, 37, 34) pour diriger et pour focaliser les premier et deuxième faisceaux de lumière (32b, 42b) dans un point focal (F) sur un disque optique (2) ;
des composants optiques (34, 37, 33, 45, 46) pour diriger des faisceaux de lumière réfléchis (32c, 42c ; 32d, 42d) vers les unités de détection optiques (60 ; 70) du système de détection optique (35).

11. Appareil d'entraînement de disque (101) selon la revendication 10, dans lequel lesdits composants optiques (43, 44, 37, 34 ; 34, 37, 33, 45, 46) sont agencés de telle façon que lesdits premier et deuxième faisceaux de lumière (32, 42) présentent des trajets de lumière au moins partiellement communs.

12. Appareil d'entraînement de disque (101) selon la revendication 10, dans lequel lesdits composants optiques (43, 44, 37, 34 ; 34, 37, 33, 45, 46) sont agencés de telle façon que lesdits premier et deuxième faisceaux de lumière (32, 42) présentent des trajets de lumière complètement séparés.
